# FASCICULE DE BREVET EUROPEEN

(11) **EP 3 890 214 B1**
(45) Date de publication et mention de la délivrance du brevet: **10.07.2024**
(21) Numéro de dépôt: 21163237.7
(22) Date de dépôt: 17.03.2021
(51) Int. Cl.: H04B 13/00

(54) **ACQUISITION DE DROIT TEMPORAIRE PAR TRANSMISSION D'ONDE RADIO EN CHAMP PROCHE**
ERWERB EINES ZEITLICH BEFRISTETEN RECHTS DURCH NAHFELD-FUNKWELLENÜBERTRAGUNG
ACQUISITION OF TEMPORARY RIGHT BY TRANSMISSION OF NEAR-FIELD RADIO WAVE

(30) Priorité: 01.04.2020 FR 2003241
(43) Date de publication de la demande: 06.10.2021
(73) Titulaire: Orange, 92130 Issy-les-Moulineaux (FR)
(72) Inventeur: JAVAUDIN, Jean-Philippe, 92326 CHÂTILLON CEDEX (FR); DUSSAUME, Philippe, 92326 CHÂTILLON CEDEX (FR)

(56) Documents cités:
- WO-A1-2016/001506
- WO-A1-2018/109330
- WO-A1-2018/126250
- WO-A1-2019/063902

## Description

### 1. Domaine de l'invention

L'invention concerne les communications sans fils à courte portée pour la transmission de données entre deux dispositifs par l'intermédiaire du corps humain.

### 2. Etat de la technique antérieure

Les communications en champ proche, usuellement connues sous le sigle NFC (pour "Near Field Communication"), basées principalement sur la norme ISO 14443 (International Standard Organisation), utilisent des technologies sans fil pour permettre un échange d'informations entre deux périphériques éloignés d'une courte distance, typiquement inférieure à dix centimètres. Les communications de ce type offrent de nombreuses applications, par exemple dans les domaines du paiement ou du transport. Le récepteur en champ proche reçoit un message de la part de l'émetteur en champ proche. Un tel message peut correspondre, dans le contexte précité, à la validation d'une transaction telle que par exemple l'échange d'un ticket (de spectacle, de transport, etc.), un paiement, le lancement d'un service personnalisé sur un ordinateur, un téléviseur, l'accès à un local, etc.

On connaît dans l'état de la technique un système permettant d'échanger de tels messages, dans lequel le récepteur est contenu dans un terminal porté par un utilisateur, les messages étant reçus par le récepteur au cours d'une communication intracorporelle via l'utilisateur du terminal. Une communication intracorporelle utilise la capacité de conductivité du corps humain pour transmettre les ondes électromagnétiques porteuses de communications sans fil. Une telle technologie est appelée IBC (pour "Intra-Body Communication" en anglais).

Un tel système de communication sans fil comprend un terminal porté par un utilisateur, dont l'antenne est directement en contact avec l'utilisateur, ou très proche de lui, par exemple dans un vêtement ou un sac. Il comprend en outre une borne de communication NFC comprenant un émetteur dont l'antenne est par exemple intégrée dans une surface sensitive sur laquelle l'utilisateur peut effectuer un geste de rapprochement, par exemple poser la main sur l'antenne, l'effleurer ou ne faire que rapprocher la main de l'antenne à quelques centimètres de celle-ci. Un signal émis par la borne est modulé au moyen d'un modulateur basse fréquence et transmis à travers le corps de l'utilisateur. Il est en effet connu que le corps humain présente des capacités de conduction adaptées pour véhiculer de tels signaux électromagnétiques dès lors que l'antenne émettrice est située à proximité (à moins de quelques centimètres) du corps de l'utilisateur.

Le terminal reçoit le signal du fait du contact physique, ou du moins de la proximité, de l'utilisateur avec l'antenne de la borne. Le signal reçu est démodulé et éventuellement transmis à un équipement adapté pour effectuer des traitements, en l'espèce pour mettre en oeuvre une transaction (paiement, ouverture de porte, etc.). Dans d'autres modes de réalisation, le terminal porté par l'utilisateur fonctionne en mode émetteur et la borne de communication NFC en mode récepteur, ou bien tous les deux en mode bidirectionnel. Afin de sécuriser ce type de transaction, il est proposé dans le document WO2016/001506 de détecter et de valider un geste de rapprochement de l'utilisateur, afin de s'assurer que le geste est volontaire et non accidentel. Dans le même but, il est proposé dans le document WO2019/063902 d'identifier un utilisateur à l'aide de la trace du signal radioélectrique laissée par le geste qu'il effectue. La combinaison des technologies NFC et IBC selon ces techniques antérieures permettent donc de déclencher l'octroi d'un droit en le conditionnant soit à la détection de ce geste de validation, soit à l'identification d'un utilisateur par sa signature à travers le geste de validation, mais ne convient pas pour tous les types de droits, par exemple lorsque l'attribution du droit doit être conditionnée à des caractéristiques temporelles du geste, ou à un ensemble de gestes exécutés par plusieurs utilisateurs.

Un des buts de l'invention est de remédier à ces inconvénients de l'état de la technique.

### 3. Exposé de l'invention

L'invention vient améliorer la situation à l'aide d'un procédé de réception d'une onde radio en champ proche (NFC), l'onde étant reçue en utilisant des capacités de conduction d'onde électromagnétique du corps (IBC) d'un utilisateur apte à effectuer un geste de validation modifiant des caractéristiques de l'onde radio, le procédé comprenant :
- détection d'une première modification de caractéristique de l'onde radio, la première modification étant résultante d'un début dudit geste,
- émission d'un message relatif à la détection de la première modification, dit message de détection, à destination d'un serveur gérant un droit pour l'utilisateur,
- détection d'une seconde modification de caractéristique de l'onde radio, la seconde modification étant résultante d'une fin dudit geste,
la première modification et la seconde modification conditionnant l'acquisition d'un droit pour l'utilisateur.

Le geste de validation est par exemple la pose momentanée de la main de l'utilisateur sur le lecteur d'une borne NFC. Un objet du procédé réside dans le fait de séparer la détection de la pose de la main sur une borne NFC, de la détection du retrait de la main.

La détection du début du geste peut consister en une détection d'une augmentation de l'énergie du signal NFC ou de sa dérivée au-dessus d'un certain seuil. De même, la détection de la fin du geste peut consister en une détection d'une diminution de l'énergie du signal NFC ou de sa dérivée au-dessus d'un certain seuil.

Selon la technique antérieure, c'est le geste de validation dans son ensemble qui est détecté, ce qui permet par exemple d'ouvrir un droit au bénéfice de l'utilisateur. Pour fermer ce droit, selon la technique antérieure, il est nécessaire de recourir à un critère externe comme une durée de vie prédéterminée du droit, ou la survenance d'un événement particulier indépendant du geste de validation effectué par l'utilisateur. Le terme "droit" signifie ici n'importe quel droit, privilège ou autorisation, qui est inaccessible à l'utilisateur, sauf s'il effectue le geste de validation attendu.

Grâce au procédé proposé, il est possible de lier la durée de vie du droit directement à la durée du geste de validation. Le droit est acquis si le geste de validation attendu effectué par l'utilisateur s'étend sur une durée comprise entre deux moments précis dans le temps.

Par exemple, cela permet de limiter l'accès de l'utilisateur à un service ou à un local, uniquement à la période de contact entre sa main et une borne NFC. Par exemple, la période de contact ainsi déterminée peut correspondre à la période de déverrouillage d'une serrure électrique d'une porte.

Dans une autre application, il est aussi possible de conditionner l'acquisition d'un droit particulier destiné à être consommé ultérieurement, à l'exécution du geste de validation à un moment prédéfini: il faut que le début et la fin du geste soient détectés, et de vérifier qu'ils encadrent bien le moment prédéfini.

Selon un aspect du procédé de réception, l'onde radio comprend des trames, le procédé comprenant l'extraction d'un identifiant d'un dispositif émetteur de l'onde radio en champ proche, à partir d'une trame.

Grâce à cet aspect, le gestionnaire de droit peut identifier le droit à attribuer en fonction du dispositif utilisé pour l'émission de l'onde radio, par exemple une borne NFC.

Selon un aspect du procédé de réception, l'onde radio comprend des trames, le procédé comprenant l'extraction, à partir d'au moins une trame, d'un code de vérification variable dans le temps, appelé aléa.

Grâce à cet aspect, le gestionnaire de droit peut vérifier à quel moment le geste a été effectué par l'utilisateur. L'aléa est par exemple un code généré à l'aide d'une fonction aléatoire utilisée de façon synchrone à la fois par le gestionnaire de droits et par l'émetteur de l'onde radio. Un nouveau code peut être généré périodiquement. Si le code est de plus unique à l'émetteur de l'onde radio en champ proche et permet au gestionnaire de l'identifier, il n'est plus nécessaire que l'identifiant du dispositif émetteur soit transmis dans le message de détection. Le code, qui n'est pas falsifiable, en plus de permettre de déduire un horodatage, permet aussi au gestionnaire de droits de vérifier que l'identifiant éventuellement présent dans le message de détection est bien celui du dispositif ayant émis l'onde radio.

Le terme horodatage est ici à prendre dans le sens de valeur représentant un moment dans le temps. Cette valeur peut être absolue, comme une valeur de temps universel, ou être relative à un moment de départ, par exemple l'horodatage de détection du début d'un geste de validation ayant la valeur zéro et l'horodatage de détection de la fin du geste ayant une valeur représentant la durée écoulée depuis l'horodatage de début.

Les conditions d'acquisition du droit peuvent être vérifiées lorsque le gestionnaire de droit n'est pas compris dans le dispositif mettant en oeuvre le procédé proposé, c'est-à-dire lorsque le droit que souhaite acquérir l'utilisateur n'est pas géré localement.

Selon un aspect du procédé de réception, le message de détection comprend au moins un élément d'un groupe comprenant:
- un identifiant du dispositif émetteur de l'onde radio en champ proche,
- un aléa,
- une information relative à l'utilisateur.

Grâce à l'identifiant du dispositif émetteur, le gestionnaire de droit distant peut identifier quel droit est demandé par l'utilisateur.

Grâce à l'aléa, le gestionnaire de droit distant peut vérifier l'identifiant du dispositif émetteur et/ou l'horodatage du geste de validation.

Grâce à l'information relative à l'utilisateur, le gestionnaire de droit distant peut vérifier si l'utilisateur est bien habilité à recevoir le droit qu'il demande. L'information relative à l'utilisateur peut être simplement un identifiant du terminal mobile utilisé par l'utilisateur.

Selon un aspect du procédé de réception, plusieurs messages de détection successifs sont émis jusqu'à la détection de la seconde modification, le premier message de la série étant émis dès la détection de la première modification.

Grâce à cet aspect, le gestionnaire de droits peut maintenir le droit tant que sont émis vers lui des messages de détection valides, c'est-à-dire comprenant les informations attendues par le gestionnaire. La durée de vie du droit acquis est donc un multiple de la durée s'écoulant entre chaque émission de message.

Selon un aspect du procédé de réception, l'extraction d'une donnée à partir d'une trame est précédée par l'émission d'un message indicatif de la détection du geste de validation, dit message de retour, à destination du dispositif émetteur de l'onde radio en champ proche.

Grâce à cet aspect, le terminal peut signifier à la borne émettrice de l'onde radio qu'il est prêt à communiquer. Cela renforce la sécurité car cela permet à la borne d'attendre ce moment avant d'émettre une trame comprenant son identifiant et/ou son code (aléa) dans des trames de l'onde radio. Ainsi, l'identifiant de la borne et/ou son code ne peuvent pas être captés accidentellement ou malicieusement par un terminal d'un autre utilisateur sans qu'il y ait de geste de validation volontaire de la part de l'utilisateur.

L'invention concerne aussi un dispositif récepteur d'une onde radio en champ proche, l'onde étant reçue en utilisant des capacités de conduction d'onde électromagnétique du corps d'un utilisateur apte à effectuer un geste de validation modifiant des caractéristiques de l'onde radio, le dispositif comprenant un circuit de détection, un processeur et une mémoire couplée au processeur avec des instructions destinées à être exécutées par le processeur pour :
- détecter une première modification de caractéristique de l'onde radio, la première modification étant résultante d'un début dudit geste ; - émettre au moins un message relatif à la détection de la première modification, dit message de détection, à destination d'un serveur gérant un droit pour l'utilisateur, et
- détecter une seconde modification de caractéristique de l'onde radio, la seconde modification étant résultante d'une fin dudit geste ;
les détections conditionnant l'acquisition d'un droit pour l'utilisateur.

Ce dispositif, apte à mettre en oeuvre dans tous ses modes de réalisation le procédé de réception qui vient d'être décrit, est destiné à être mis en oeuvre dans un terminal d'utilisateur, par exemple un terminal mobile porté par son utilisateur, par exemple à la main, ou dans un vêtement ou dans un sac. Les deux moments, respectivement de la détection de la première modification indicative du début du geste de validation, et de la détection de la seconde modification indicative de sa fin, limitent dans le temps le droit attribué.

L'invention concerne encore un système d'acquisition d'un droit temporaire, comprenant :
- un dispositif récepteur tel que celui qui vient d'être décrit,
- un dispositif émetteur, apte à émettre une onde radio en champ proche, et
- un dispositif de gestion de droits, apte à attribuer un droit en fonction au moins d'une information relative au début et à la fin du geste de validation.

Dans un tel système, le dispositif récepteur est par exemple compris dans un terminal mobile porté par son utilisateur, le dispositif émetteur est par exemple compris dans une borne NFC, et le dispositif de gestion est par exemple compris dans un serveur de droits. Le gestionnaire de droits peut être distinct ou non du terminal mobile. Lorsqu'il en est distinct, il est important qu'il communique avec lui par une technologie de communication autre que NFC mais sans latence excessive, par exemple par un réseau de communication cellulaire de type 3GPP.

Une borne dite NFC comprend une antenne NFC pour émettre, et dans certains cas recevoir, une onde en champ proche, qui peut être composée de trames NFC. Cette antenne peut être placée derrière un écran solide, ou intégrée dans cet écran, aussi appelé surface tactile. Cette surface peut être touchée ou effleurée par l'utilisateur, avec la main par exemple. L'onde NFC émise par la borne avec des caractéristiques de départ passe à travers le corps de l'utilisateur et est reçue par le terminal mobile avec des caractéristiques d'arrivée. Les différences entre les caractéristiques de départ et d'arrivée de l'onde dépendent de l'emplacement du corps de l'utilisateur par rapport à la borne, par rapport au terminal, et de caractéristiques liées au milieu de propagation de l'onde. Ces dernières sont intrinsèques à l'utilisateur, telles que ses caractéristiques physiologiques, les vêtements qu'il porte, etc.

Dans un mode de réalisation, le serveur de droits doit pouvoir connaitre au moins deux choses: le droit demandé par l'utilisateur, et la période pour laquelle le droit demandé peut être octroyé.

Pour identifier le droit demandé, un identifiant de la borne NFC peut suffire. Cet identifiant peut être compris dans les trames NFC émises par la borne, et reçues par le terminal. Le terminal peut extraire cet identifiant et l'émettre vers le serveur de droits dans le message dit de détection. Concernant la période pour laquelle le droit doit être octroyé, le terminal peut en outre insérer dans le message de détection un horodatage du début et un horodatage de la fin du geste de validation effectué par l'utilisateur, et détecté par le terminal.

Selon un aspect du système d'acquisition d'un droit temporaire,
- le dispositif émetteur comprend un moyen de détection d'un contact physique avec l'utilisateur, et
- le dispositif de gestion de droits est en outre apte à attribuer le droit en fonction d'une information relative au contact physique.

Dans un autre mode de réalisation, le serveur de droits peut vouloir vérifier que l'association entre le terminal et la borne NFC est réelle, et non fortuite, ou volontairement simulée. Ce peut être le cas par exemple si le terminal passe par accident à proximité de la borne, ou si un utilisateur non légitime détient l'identifiant de la borne et fait en sorte qu'il soit inséré dans un message de détection à destination du serveur de droits, sans que le terminal soit à proximité de la borne. Ceci est évité si la borne détecte un contact entre l'utilisateur et elle-même, au travers de la surface tactile par exemple, et émet vers le serveur de droits une information relative à ce contact.

Selon un aspect du système d'acquisition d'un droit temporaire,
- le dispositif émetteur comprend en outre un moyen d'insertion dans l'onde radio en champ proche d'un aléa connu du dispositif de gestion de droits, et
- le dispositif récepteur comprend en outre un moyen d'extraction dudit aléa, et un moyen de transmission dudit aléa vers le dispositif de gestion de droits.

Dans un autre mode de réalisation, le serveur de droits peut vouloir vérifier que l'horodatage du début et l'horodatage de la fin du geste de validation sont valides et non inventés ou falsifiés par le terminal. A cette fin, une valeur connue à la fois de la borne NFC et du serveur de droits est générée suivant une séquence, une périodicité et un calage temporel précis. Cette valeur est appelée aléa. Connaissant un aléa, le serveur de droits est donc capable de déterminer le moment exact où il a été généré, et c'est la fiabilité de l'aléa qui constitue la fiabilité d'un horodatage. On comprend aussi que la fréquence de renouvellement des aléas, ou plus exactement, l'intervalle de temps séparant deux générations d'aléa, constitue la marge de précision des horodatages.

Si dans le message de détection le terminal communique à la fois un aléa extrait et un horodatage déclaré, le serveur de droits peut comparer l'horodatage déclaré par le terminal avec celui correspondant à l'aléa, et empêcher l'attribution du droit demandé en l'absence de correspondance.

La borne NFC et le serveur de droits doivent posséder le même aléa en même temps. Ceci peut être réalisé de différentes façons: soit l'aléa est généré séparément par chacun d'eux par un générateur d'aléa programmé identiquement, soit l'un d'eux seulement le génère et le communique à l'autre en temps réel par un canal quelconque mais distinct de celui constitué par l'onde radio en champ proche reçue par le terminal de l'utilisateur.

Selon un aspect du système d'acquisition d'un droit temporaire, le dispositif émetteur comprend :
- un moyen de détection d'un contact physique avec l'utilisateur, et
- un moyen d'insertion dans l'onde radio en champ proche d'un aléa connu du dispositif de gestion de droits, ce moyen étant activé après détection du contact physique avec l'utilisateur.

Ainsi, les aléas ne peuvent pas être captés accidentellement ou malicieusement par un terminal d'un autre utilisateur sans qu'il y ait de geste de validation volontaire de la part de l'utilisateur.

L'invention concerne aussi un programme d'ordinateur comprenant des instructions qui, lorsque ces instructions sont exécutées par un processeur, conduisent celui-ci à mettre en oeuvre les étapes du procédé de réception d'une onde radio en champ proche, qui vient d'être décrit.

L'invention vise aussi un support d'informations lisible par un dispositif récepteur d'une onde radio en champ proche, et comportant des instructions d'un programme d'ordinateur tel que mentionné ci-dessus.

L'invention vient en outre améliorer la situation à l'aide d'un dispositif de gestion d'un droit attribué sur la base d'une pluralité de gestes de validation effectués par au moins un utilisateur, les gestes modifiant une caractéristique d'une onde radio utilisant des capacités de conduction d'onde électromagnétique en champ proche du corps de l'au moins un utilisateur, le dispositif comprenant un processeur et une mémoire couplée au processeur avec des instructions destinées à être exécutées par le processeur pour:
- obtenir une pluralité d'informations relatives à des instants de détection de modifications de caractéristique d'onde radio en champ proche, dites informations de détection,
- attribuer le droit à l'au moins un utilisateur sur la base des instants des détections.

L'invention concerne aussi un système d'attribution d'un droit, comprenant :
- des dispositifs émetteurs, chacun étant apte à émettre une onde radio en champ proche,
- des dispositifs récepteurs d'ondes radio en champ proche, chacun étant apte à recevoir une onde radio en champ proche en utilisant des capacités de conduction d'onde électromagnétique du corps d'au moins un utilisateur apte à effectuer au moins un geste de validation modifiant des caractéristiques de l'onde radio en champ proche, chaque dispositif récepteur comprenant un circuit de détection d'une modification de caractéristique de l'onde radio, et
- un dispositif de gestion de droit tel que celui qui vient d'être décrit, les informations de détection étant fournies par les dispositifs récepteurs.

Grâce au système d'attribution de droit selon l'invention, il est possible de conditionner l'attribution du droit au degré de simultanéité ou de séquencement d'une pluralités de gestes de validation effectués par un ou plusieurs utilisateurs sur une ou plusieurs bornes NFC.

Selon un aspect du système d'attribution d'un droit, les gestes de validation d'au moins deux utilisateurs sont pris en compte.

La condition d'attribution du droit peut être la simultanéité de deux gestes, effectués sur deux bornes NFC par deux utilisateurs portant chacun un terminal mobile sur eux. Chaque borne NFC comprend un dispositif émetteur, et chaque terminal comprend un dispositif récepteur qui émet vers un dispositif de gestion de droit les informations relatives aux horodatages de détections des gestes. Le droit, par exemple l'ouverture d'une session en ligne pour l'accès à des données sensibles nécessitant l'authentification combinée de deux personnes (un employé et son supérieur hiérarchique par exemple), sera attribué si les deux personnes effectuent toutes les deux un geste de validation sur une borne NFC, les bornes NFC pouvant être à des endroits différents, voire très éloignés les uns des autres. La combinaison des deux gestes, c'est-à-dire la façon dont ils sont effectués dans le temps, doit respecter une combinaison attendue, qui par exemple une simultanéité, ou un séquencement.

Le système permet aussi que deux utilisateurs ou plus, avec chacun leur terminal comprenant un dispositif récepteur, effectuent leur geste sur la même borne NFC comprenant un unique dispositif émetteur.

Le système s'applique aussi à des cas plus compliqués, avec un nombre quelconque d'utilisateurs et un nombre quelconque de bornes NFC, et la condition d'attribution peut être plus complexe qu'une simple simultanéité ou un simple séquencement. Par exemple les gestes peuvent devoir être séquencés selon un certain ordre, telle borne NFC devant suivre telle autre.

Selon un aspect du système d'attribution d'un droit, deux gestes de validation d'un utilisateur sont pris en compte.

Le système trouve aussi son application dans un cas très particulier, avec un seul utilisateur, et sans terminal mobile. L'utilisateur doit effectuer un geste avec chacune de ses deux mains sur deux bornes NFC distinctes mais pas trop éloignées l'une de l'autre, chaque borne comprenant à la fois un dispositif émetteur et un dispositif récepteur. Dans ce cas c'est la détection croisée des deux gestes de validation qui déclenche l'attribution du droit. Comme dans les autres cas décrits plus haut, le dispositif de gestion de droits peut être compris dans l'une des deux bornes NFC ou en être distinct, selon le type de droit considéré.

Selon un aspect du système d'attribution d'un droit, le circuit de détection d'un dispositif récepteur est agencé pour :
- détecter une première modification de caractéristique de l'onde radio, la première modification étant résultante d'un début dudit geste,
- détecter une seconde modification de caractéristique de l'onde radio, la seconde modification étant résultante d'une fin dudit geste,
où le dispositif de gestion de droit est en outre apte à attribuer le droit sur la base des instants de début et de fin des gestes de validation.

Afin de déterminer le degré de distribution dans le temps des gestes de validation, il est préférable que le dispositif de gestion de doits connaisse les instants de début et de fin de chacun des gestes. Au niveau du gestionnaire de droits, un horodatage d'un geste de validation peut être soit obtenu directement dans l'information de détection, soit déduit indirectement par l'instant de réception de l'information de détection de début ou de fin de geste de validation, soit rendu possible par une information indirecte, telle que par exemple un aléa généré aléatoirement et communiqué par le dispositif récepteur dans les informations de détection, le mode de génération de l'aléa, ou l'aléa lui-même, étant également connu par le dispositif de gestion de droits et lui permettant de retrouver l'horodatage des gestes.

L'invention concerne aussi un procédé de gestion d'un droit attribué sur la base d'une pluralité de gestes de validation effectués par au moins un utilisateur, les gestes modifiant une caractéristique d'une onde radio utilisant des capacités de conduction d'onde électromagnétique en champ proche du corps de l'au moins un utilisateur, le procédé comprenant :
- obtention d'une pluralité d'informations relatives à des instants de détection de modifications de caractéristique d'onde radio en champ proche, dites informations de détection,
- attribution du droit à l'au moins un utilisateur sur la base des instants des détections.

Ce procédé peut être mis en oeuvre par le dispositif de gestion de droits décrits ci-dessus. Les informations de détection sont par exemple émise par des dispositifs récepteurs d'ondes radio en champ proche (NFC), tels que décrits ci-dessus.

Si la condition d'attribution du droit est une forme de simultanéité entre tous les gestes, il suffit pour le procédé de vérifier qu'aucun des gestes n'est éloigné d'un instant défini de plus d'un certain seuil.

Si la condition d'attribution du droit est une forme de séquencement entre tous les gestes, il suffit pour le procédé de vérifier que tous les gestes se suivent en respectant éventuellement un écart temporel minimal, ou maximal, entre deux gestes, et éventuellement dans un ordre défini, s'il est possible de distinguer les gestes ou les bornes NFC sur lesquelles les gestes sont effectués.

Selon un aspect du procédé de gestion d'un droit, les informations de détection comprennent des informations relatives à des instants de début et de fin des gestes de validation, ces instants définissant des intervalles propres à chacun des gestes, et l'attribution du droit est effectuée en fonction d'un critère relatif à une distribution dans le temps des intervalles.

Grâce aux informations d'intervalle de chacun des gestes de validation, le procédé peut vérifier n'importe quel type de distribution dans le temps quelle que soit sa complexité, simultanéité, séquencement, ou combinaison de simultanéité et de séquencement.

Si le critère est purement une simultanéité des gestes de validation, il suffit de vérifier que tous les intervalles ont un instant en commun.

Pour des critères plus complexes, il est possible de mesurer et vérifier des délais minimum entre des gestes de validation successifs, ou au contraire des périodes de recouvrement minimum.

Selon un aspect du procédé de gestion d'un droit, les informations de détection comprennent un code de vérification variable dans le temps, appelé aléa, l'aléa ayant été inséré dans l'onde radio en champ proche par un dispositif émetteur de l'onde.

Grâce à cet aspect, il est possible de vérifier que l'horodatage du début et l'horodatage de la fin d'un geste de validation sont valides et non inventés ou falsifiés. A cette fin, une valeur connue à la fois du dispositif émetteur de l'onde radio NFC et du dispositif de gestion de droits est générée suivant une séquence, une périodicité et un calage temporel précis. Cette valeur est appelée aléa. Connaissant un aléa, il est donc possible de déterminer le moment exact où il a été généré, et c'est la fiabilité de l'aléa qui constitue la fiabilité d'un horodatage. On comprend aussi que la fréquence de renouvellement des aléas, ou plus exactement, l'intervalle de temps séparant deux générations d'aléa, constitue la marge de précision des horodatages.

Ces aléas peuvent suffire en tant qu'informations relatives à des détections horodatées des gestes de validation. Si ces informations comprennent en outre des horodatages déclarés explicitement par les dispositifs récepteurs d'onde, il est possible de comparer l'horodatage déclaré avec celui correspondant à l'aléa, et d'empêcher l'attribution du droit demandé en l'absence de correspondance.

Le dispositif émetteur de l'onde radio et le dispositif de gestion de droits doivent posséder le même aléa en même temps. Ceci peut être réalisé de différentes façons: soit l'aléa est généré séparément par chacun d'eux par un générateur d'aléa programmé identiquement, soit l'un d'eux seulement le génère et le communique à l'autre en temps réel par un canal quelconque distinct de celui constitué par l'onde radio en champ poche.

Selon un aspect du procédé de gestion d'un droit, chaque aléa est propre à un dispositif émetteur d'onde en champ proche.

Ainsi, il est possible pour le dispositif de gestion de distinguer entre eux les dispositifs émetteurs d'onde en champ proche, uniquement sur la base des informations de détection. Il est donc par exemple possible de vérifier que des gestes de validation ont bien été effectués sur tous les dispositifs émetteurs attendus.

L'invention concerne aussi un programme d'ordinateur comprenant des instructions qui, lorsque ces instructions sont exécutées par un processeur, conduisent celui-ci à mettre en oeuvre les étapes du procédé de gestion qui vient d'être décrit.

L'invention vise aussi un support d'informations lisible par un dispositif de gestion de droit, et comportant des instructions d'un programme d'ordinateur tel que mentionné ci-dessus.

Les programmes mentionnés ci-dessus peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Les supports d'informations mentionnés ci-dessus peuvent être n'importe quelle entité ou dispositif capable de stocker le programme. Par exemple, un support peut comporter un moyen de stockage, tel qu'une ROM, par exemple un CD ROM ou une ROM de circuit microélectronique, ou encore un moyen d'enregistrement magnétique.

Un tel moyen de stockage peut par exemple être un disque dur, une mémoire flash, etc. D'autre part, un support d'informations peut être un support transmissible tel qu'un signal électrique ou optique, qui peut être acheminé via un câble électrique ou optique, par radio ou par d'autres moyens. Un programme selon l'invention peut être en particulier téléchargé sur un réseau de type Internet.

Alternativement, un support d'informations peut être un circuit intégré dans lequel un programme est incorporé, le circuit étant adapté pour exécuter ou pour être utilisé dans l'exécution des procédés en question.

### 4. Présentation des figures

D'autres avantages et caractéristiques de l'invention apparaitront plus clairement à la lecture de la description suivante d'un mode de réalisation particulier de l'invention, donné à titre de simple exemple illustratif et non limitatif, et des dessins annexés, parmi lesquels :
[Fig 1] La figure 1 présente de mise en oeuvre du procédé de réception d'une onde radio, selon un mode de réalisation de l'invention,
[Fig 2] La figure 2 présente un exemple de la puissance d'une onde radio en champ proche correspondant à un geste de validation, selon un mode de réalisation de l'invention,
[Fig 3] La figure 3 présente un système d'attribution d'un droit conditionné à la réalisation de gestes de validation par plusieurs utilisateurs,
[Fig 4] La figure 4 présente un système d'attribution d'un droit conditionné à la réalisation de plusieurs gestes de validation par un seul utilisateur,
[Fig 5] La figure 5 présente un exemple de structure d'un dispositif de réception d'une onde radio en champ proche, selon un aspect de l'invention,
[Fig 6] La figure 6 un exemple de structure d'un dispositif de gestion d'un droit attribué sur la base d'une pluralité de gestes de validation effectués par au moins un utilisateur, selon un aspect de l'invention.

### 5. Description détaillée d'au moins un mode de réalisation de l'invention

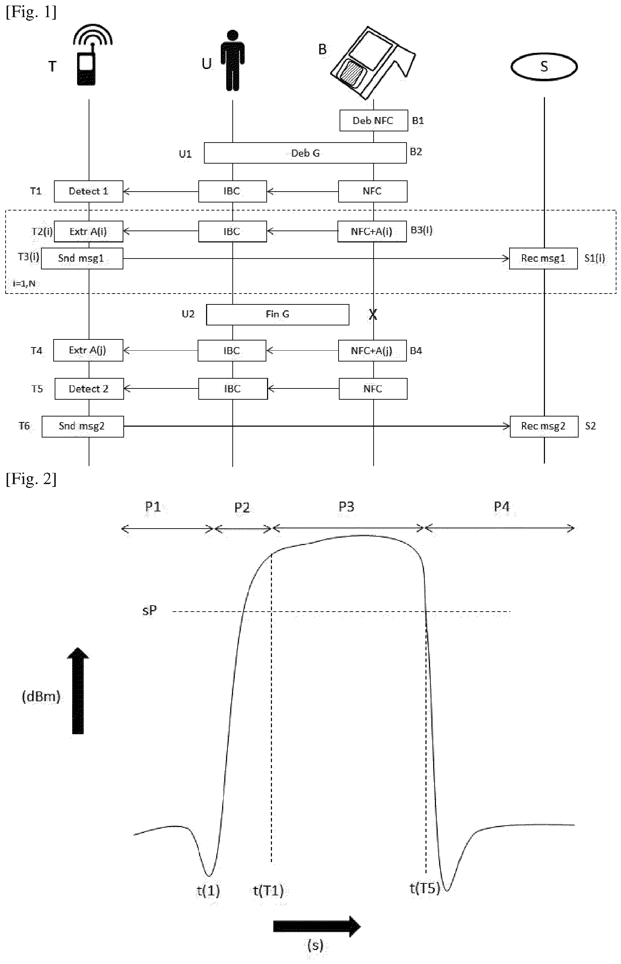

La figure 1 présente un exemple de mise en oeuvre du procédé de réception d'une onde radio, selon un mode de réalisation de l'invention.

L'utilisateur U porte sur lui un terminal T, par exemple un smartphone apte à recevoir des trames d'une onde radio NFC. Lorsque l'utilisateur U approche une partie de son corps, par exemple une de ses mains, d'un borne B émettrice de trames NFC, la transmission de ces trames commence à être possible entre la borne B et le terminal T, à travers le corps de l'utilisateur U.

Lors d'une étape B1, la borne B commence à émettre des trames NFC. Cette étape peut être déclenchée selon plusieurs critères qui seront abordés plus bas.

Lors d'une étape U1, l'utilisateur U exécute avec la borne B le début d'un geste dit de validation. Ce geste de validation est attendu de lui pour qu'il obtienne en échange un droit particulier.

Lors d'une étape B2, optionnelle, la borne B détecte un contact avec l'utilisateur U, par exemple au travers d'une surface sensible prévue à cet effet sur la borne B. Cette détection est un exemple d'événement pouvant déclenchant l'émission de trames NFC par la borne B. Dans ce cas l'étape B2 a lieu avant l'étape B1.

Il n'est pas nécessaire que la borne B détecte le contact. L'émission des trames NFC peut aussi bien être déclenchée par un autre moyen, par exemple partir d'une certaine heure, ou suite à une action de l'utilisateur qui est indépendante du geste de validation, comme par exemple actionner un interrupteur sur la borne.

Lorsque l'utilisateur débute son geste de validation, le terminal T peut commencer à recevoir une onde radio porteuse de trames NFC, l'onde étant transmise à travers le corps (IBC) de l'utilisateur U. A partir d'un certain point, lors d'une étape T1 qui est présentée plus en détail en relation avec la figure 2, la puissance de cette onde radio devient suffisante pour que le terminal T détecte le début du geste de validation.

Lors d'une étape T3(i), le terminal T émet vers un gestionnaire de droits, qui peut être compris dans un serveur S, un message de détection msg1. Ce message peut par exemple être transmis au travers d'un réseau de communications cellulaire, ou d'un réseau local de type WiFi ou Bluetooth, en tant que message sms ou à l'aide d'une connexion Internet si le réseau est de génération 3G ou ultérieure.

Le message msg1 comprend au moins une information indiquant au serveur S que le terminal T a détecté le début d'un geste de validation effectué par l'utilisateur U.

De plus, le message msg1 peut comprendre d'autres informations que le terminal T doit extraire d'au moins une des trames NFC reçues, lors d'une étape T2(i) antérieure à l'étape T3(i).

Au cours de cette étape T2(i) qui inclut une démodulation de l'onde radio reçue porteuse de trames NFC, le terminal T reçoit donc une trame NFC émise par la borne B lors d'une étape B3(i).

Lors de l'étape B3(i) la borne B émet une trame NFC dans laquelle la borne B a inséré diverses informations. Parmi ces informations on peut trouver:
- un code de vérification A(i), appelé aléa, destiné au gestionnaire de droits,
- un identifiant de la borne B, si le code est absent, ou insuffisant pour permettre d'identifier la borne B.

L'aléa A(i) est un code connu à la fois par la borne B et par le gestionnaire de droits. Il est utilisé pour signifier que la trame NFC qui le transporte a bien été émise par la borne B et non par un autre dispositif, ou pour signifier qu'elle a été émise à un moment où ce code est valable (si le code varie dans le temps), ou pour signifier les deux. La connaissance commune du code par la borne et le gestionnaire de droits peut être réalisée de plusieurs façons. Soit l'aléa est généré par l'un des deux puis communiqué en temps réel à l'autre, par un moyen quelconque tel qu'une connexion Internet portée ou non par un réseau cellulaire, soit les deux possèdent chacun un module logiciel générant en synchronisation les mêmes aléas.

Toujours au cours de l'étape T2(i), le terminal T extrait l'aléa A(i) de la trame NFC reçue. Dans une variante, le terminal extrait également de la trame NFC un identifiant de la borne B. On peut rappeler que l'aléa A(i) n'a aucune signification pour le terminal B mais lui permet de prouver qu'il a bien obtenu une trame NFC de la part d'une certaine borne à un certain moment.

Lors de l'étape T3(i), le terminal T émet donc vers le serveur S de gestion de droits le message de détection msg1 dans lequel le terminal T a inséré l'aléa A(i), en plus de l'information indiquant au serveur S que le terminal T a détecté le début d'un geste de validation.

Lors d'une étape S1 (i), le serveur S reçoit le message de détection msg1. En analysant ce message, à l'aide de l'aléa A(i), le serveur S détermine qu'un utilisateur a effectué sur la borne B le début d'un geste de validation. C'est à cet instant To que le droit est "ouvert", c'est-à-dire que le droit passe d'un état non activé à un état activé.

Dans une variante où le droit est personnalisé, le terminal T insère également un identifiant de l'utilisateur U dans le message msg1, ce qui permet au serveur S de déterminer que c'est l'utilisateur U, et non un autre utilisateur, qui demande l'ouverture du droit. L'identifiant de l'utilisateur U peut être éventuellement accompagné d'un mot de passe dans le message msg1, au cas où le serveur S doit authentifier l'utilisateur U, en consultant un serveur d'authentification distinct, par exemple.

L'identification de l'utilisateur U peut également être réalisée à l'aide de son empreinte physio-dynamique, c'est-à-dire sa façon de faire le geste de validation. En effet, la forme du signal reçu au niveau du terminal T dépend de ses caractéristiques physiologiques (morphologie, indice corporel de masse) ainsi que de la façon dont il effectue son geste (rapidité d'approche et d'éloignement, stabilité). Une trace du geste peut être générée par le terminal et insérée dans le message de détection. La trace du geste peut être comparée par le serveur S avec d'autres traces d'une base de données de traces, comprenant au moins une trace provenant de l'utilisateur légitime du terminal T. Alternativement, si le terminal T est considéré fiable par le système, la reconnaissance de la trace peut lui être confiée, qui consiste alors, par exemple, à comparer la trace générée par le geste avec une trace mémorisée auparavant localement avec l'utilisateur légitime du terminal. Le score de comparaison peut-être inséré dans le msg1, ou alors une valeur binaire indiquant si le score est au-dessus est d'un certain seuil ou non. La trace du geste peut encore être générée par la borne B, par utilisation d'une technologie radio ou lumineuse passive ou active (dont NFC) ou autre (ultrasons, trackpad, empreinte digitale...), et être insérée dans la trame NFC et retransmise ensuite via le terminal T, ou dans un message entre la borne B et le serveur S, afin que celui-ci la confronte à une trace connue.

Lors d'une étape U2, l'utilisateur U exécute avec la borne B la fin du geste de validation. Lorsque l'utilisateur termine son geste de validation, à partir d'un certain point, lors d'une étape T5 qui est présentée plus en détail en relation avec la figure 2, la puissance de cette onde radio devient insuffisante et le terminal T détecte la fin du geste de validation.

La dernière trame NFC que le terminal T reçoit avant ou au moment de la détection de la fin du geste de validation est émise par la borne B lors d'une étape B4, et est reçue par le terminal T lors d'une étape T4.

Lors d'une étape T6, le terminal T émet vers le serveur S, un message de détection msg2. Le message msg2 comprend au moins une information indiquant au serveur S que le terminal T a détecté la fin du geste de validation effectué par l'utilisateur U.

En plus de l'information de fin de geste de validation, le terminal T insère dans le message msg2 l'aléa A(j) extrait de la trame NFC reçue lors de l'étape T4.

Lors d'une étape S2, le serveur S reçoit le message de détection msg2. En analysant ce message, à l'aide de l'aléa A(j), le serveur S détermine qu'un utilisateur a effectué sur la borne B la fin du geste de validation. C'est à cet instant Tf que le droit est "fermé", c'est-à-dire que le droit passe d'un état activé à un état non activé.

Dans un mode de réalisation, l'aléa est variable dans le temps. L'aléa peut donc être utilisé par le gestionnaire de droit (le serveur S) pour associer un horodatage à chacun des messages msg1 et msg2 qu'il reçoit. Le degré de précision de cet horodatage dépend de la fréquence à laquelle l'aléa est généré. Si par exemple un nouvel aléa est généré toutes les secondes, l'exactitude de l'horodatage est au plus d'une seconde.

Dans ce mode, une série de N messages msg1 est émise. Les étapes B3(i), T2(i), T3(i) et S1 (i) sont répétées N fois, avec i = 1 à N.

L'instant To d'ouverture du droit est déterminé lors de l'étape S1(1), et le droit est maintenu ouvert tant que le serveur S vérifie deux conditions:
- le message msg1 lors d'une étape S1(i) n'est pas un message msg2 de détection de fin de geste de validation, et
- l'aléa A(i) reçu lors d'une étape S1(i) est correct.

Pour déterminer l'instant Tf de fermeture du droit, c'est donc soit comme précédemment, lors de l'étape S2 à la réception d'un message msg2 par les serveur S, soit dès que le serveur S détecte un aléa A(i) incorrect dans la série de messages msg1 reçus, sans attendre la réception d'un message msg2.

La figure 2 présente un exemple de la puissance d'une onde radio en champ proche correspondant à un geste de validation, selon un mode de réalisation de l'invention.

Le terminal T comprend un moyen d'analyse de la puissance de l'onde reçue grâces aux capacités de conduction d'onde électromagnétique du corps (IBC) de l'utilisateur, lorsque celui-ci effectue un geste de validation avec la borne NFC. Ce geste modifie les caractéristiques de l'onde radio émise par la borne, en particulier la puissance de cette onde.

Les variations de puissance de l'onde radio peuvent être découpées en 4 périodes distinctes. Pendant une période P1 d'inactivité, l'utilisateur n'a pas encore débuté son geste de validation, par exemple sa main est encore insuffisamment proche de la surface sensible de la borne NFC. La puissance du signal est faible, par exemple, de - 70dBm.

La période P2 de détection d'un front montant débute à un instant t(1), lorsque la puissance de l'onde augmente soudainement. Le moyen d'analyse détecte l'instant t(1) du début du front montant par exemple en calculant la dérivée de la puissance et en surveillant l'atteinte d'un seuil sD.

Lorsqu'à la fois la dérivée retombe sous le seuil sD, et la puissance de l'onde dépasse un seuil de puissance sP, par exemple -50dBm, cela signifie que le front montant laisse place à un plateau. La période de plateau P3 débute à cet instant, t(T1), qui correspond à la détection du début du geste de validation, c'est-à-dire l'étape T1 du procédé décrit en référence à la figure 1. La période de plateau P3 dure tant que la puissance du signal reste au-dessus du seuil sP.

Une nouvelle période P4 d'inactivité débute à un instant t(T5), qui correspond à la fin du geste de validation, c'est-à-dire l'étape T5 du procédé décrit en référence à la figure 1, lorsque la puissance repasse sous le seuil sP.

Les caractéristiques de l'onde qui sont utilisées, c'est-à-dire sa puissance et sa dérivée, ainsi que l'utilisation des seuils sP et sD, ne sont qu'un exemple de réalisation parmi d'autres des moyens qui peuvent être mis en oeuvre afin de déterminer selon l'invention le début et la fin d'un geste de validation.

Dans des variantes, la fin du plateau est détectée lorsque la dérivée de la puissance passe sous un certain seuil et la puissance sous un autre seuil. Ces seuils peuvent aussi être déterminés dynamiquement en rapport avec la puissance du plateau (par exemple, il est considéré que la main est retirée lorsque la puissance baisse de 10 dBm).

Les instants t(T1) et t(T5), qui représentent des horodatages de début et de fin du geste de validation, peuvent ne pas correspondre exactement aux instants To et Tf, respectivement instants d'ouverture et de fermeture du droit par le serveur S. En effet, le réseau de communication utilisé pour transmettre les messages msg1 et msg2 induit un certain temps de latence entre leur émission par le terminal T (étapes T3(1) et T6) et leur réception par le serveur S (étapes S1(1) et S2).

Alternativement, si les instants t(T1) et t(T5) sont insérés en tant qu'horodatages dans les messages msg1 et msg2 par le terminal T, le serveur S peut les utiliser afin de faire correspondre exactement le début et la fin du geste de validation à l'ouverture et à la fermeture du droit.

Dans les modes de réalisation particuliers qui suivent, l'attribution d'un droit est conditionnée à la réalisation de plusieurs gestes de validation, effectuées par un ou plusieurs utilisateurs.

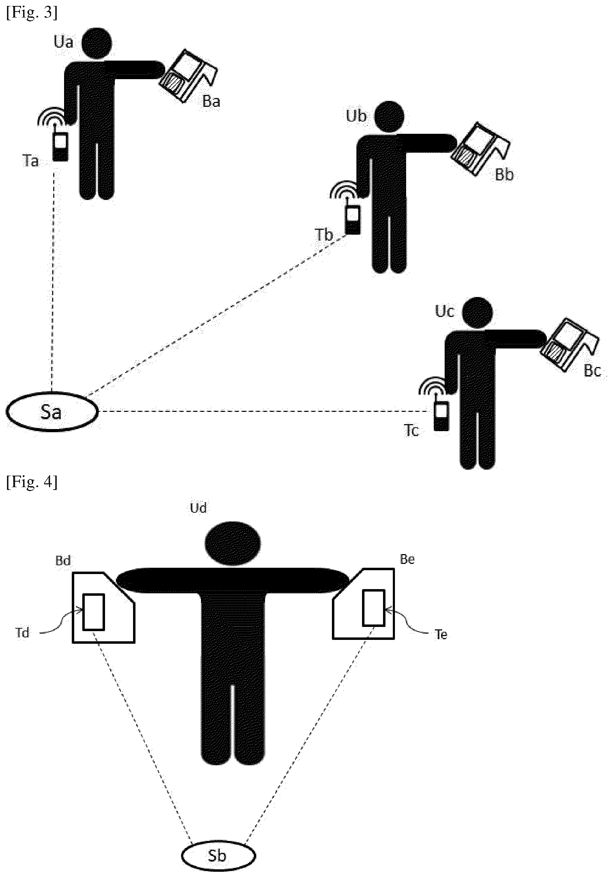

La figure 3 présente un système d'attribution d'un droit conditionné à la réalisation de gestes de validation par plusieurs utilisateurs.

Le serveur Sa attribue un droit à l'ensemble des utilisateurs Ua, Ub et Uc, à condition qu'ils effectuent chacun un geste de validation sur une borne NFC, respectivement sur les bornes Ba, Bb et Bc. Les critères d'attribution du droit incluent de plus une restriction sur la durée et le moment de chacun des gestes de validation. Le droit demandé peut être par exemple un droit d'accès à un réseau, à une application informatique ou à un service, pour une action sur un automate informatique, ou sur un mécanisme tel qu'un déverrouillage de porte sécurisée.

Le serveur Sa reçoit des messages msg1 et msg2 de la part des terminaux Ta, Tb et Tc portés respectivement par les utilisateurs Ua, Ub et Uc, tel que présenté ci-dessus en relation avec la figure 1 avec un seul utilisateur. Ces messages permettent au serveur Sa de déterminer pour chaque utilisateur un intervalle de temps IT borné par le début par la fin du geste de validation qui a été effectué.

Avec les intervalles IT(Ua), IT(Ub), IT(Uc), le serveur Sa vérifie qu'ils respectent un ou plusieurs critères tels que par exemple:
- chaque intervalle encadre le même moment précis dans le temps
- la durée des intervalles est inférieure à une valeur maximale
- la durée des intervalles est supérieure à une valeur minimale
- la durée des intervalles est située entre 2 valeurs seuil
- les intervalles se suivent dans un certain ordre
- les intervalles se suivent sans se recouvrir
- les intervalles se suivent en se recouvrant d'une durée minimale

Les critères seront d'autant plus stricts que le droit à attribuer est sensible et que la fraude est un risque.

La satisfaction des critères d'attribution du droit peut également être partielle, par exemple le serveur Sa se contente de vérifier qu'une majorité simple des gestes attendus a été correctement effectuée.

Dans un autre mode de réalisation, les terminaux Ta, Tb et Tc ne détectent que le début d'un geste de validation, ou le geste dans son ensemble. Seul l'instant t d'un geste est donc déterminé par le serveur Sa, et non l'intervalle de sa réalisation. Dans ce cas, le serveur Sa vérifie que les instants t(Ua), t(Ub), t(Uc) des gestes de validation respectent un ou plusieurs critères tels que par exemple :
- chaque instant n'est pas éloigné d'un moment précis dans le temps, de plus d'une durée maximale
- les instants se suivent dans un certain ordre
- les instants se suivent en respectant une durée de séparation minimale
- les instants se suivent en respectant une durée de séparation maximale

La figure 4 présente un système d'attribution d'un droit conditionné à la réalisation de plusieurs gestes de validation par un seul utilisateur.

Dans ce mode de réalisation, un seul utilisateur Ud effectue, de façon sensiblement simultanée, un geste de validation avec chacune de ses mains, sur deux bornes NFC distinctes, Bd et Be. Il n'est pas nécessaire que l'utilisateur porte de terminal sur lui, car chaque borne comprend également un dispositif récepteur d'onde radio en champ poche, respectivement Td et Te, en plus d'un dispositif émetteur. Les bornes Bd et Be ont les mêmes capacités que celles mises en oeuvre par la borne B pour réaliser le procédé décrit en relation avec la figure 1. De même, les dispositifs Td et Te ont les mêmes capacités que celles mises en oeuvre par le terminal T pour réaliser le procédé décrit en relation avec la figure 1. Les bornes sont aptes et configurées pour communiquer avec un gestionnaire de droits Sb, par un moyen possiblement autre qu'une onde radio en champ proche. Le gestionnaire de droits Sb possède au moins les capacités que celles mises en oeuvre par le serveur S pour réaliser le procédé décrit en relation avec la figure 1. Le gestionnaire de droits Sb peut être compris dans un serveur distant tel que le serveur Sa présenté en relation avec le figure 3, mais il peut également être intégré dans l'une des bornes Bd ou Be, qui sont alors connectées entre elles d'une façon quelconque, par exemple si les deux bornes sont réunies en une seule installation physique avec deux émetteurs et deux récepteurs d'onde radio en champ proche.

Dans ce mode de réalisation, le système proposé peut ainsi réaliser une détection croisée des gestes de validation. Combiné avec une identification physio-dynamique de l'utilisateur par le biais des traces générées par les caractéristiques des ondes radio modifiées par chacun de ses deux gestes, ce système trouve des applications dans le domaine de l'accès sécurisé par authentification biométrique.

De plus, lorsque les instants de début et de fin de chacun des deux gestes sont transmis au gestionnaire Sb, les mêmes types de critères temporels que ceux présentés en relation avec la figure 3 peuvent être utilisés pour attribuer le droit demandé par l'utilisateur.

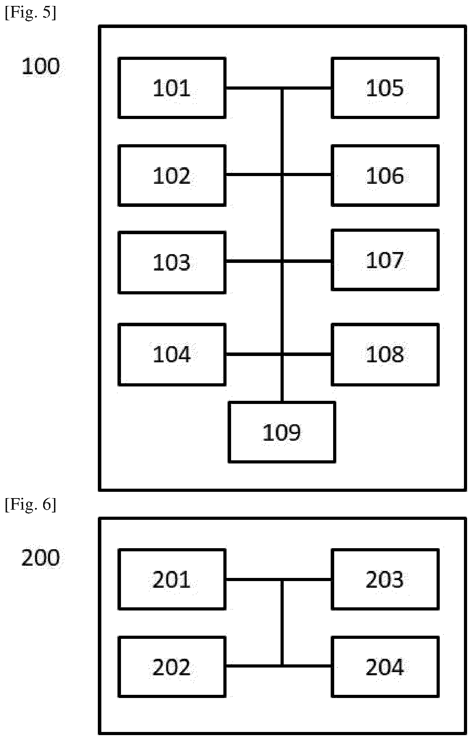

En relation avec la **figure 5****,** on présente maintenant un exemple de structure d'un dispositif de réception d'une onde radio en champ proche, selon un aspect de l'invention.

Le dispositif 100 met en oeuvre le procédé de réception d'une onde radio en champ proche, dont différents modes de réalisation viennent d'être décrits.

Par exemple, le dispositif 100 comprend une unité de traitement 101, équipée par exemple d'un microprocesseur µP, et pilotée par un programme d'ordinateur, stocké dans une mémoire et mettant en oeuvre le procédé selon l'invention. A l'initialisation, les instructions de code du programme d'ordinateur sont par exemple chargées dans une mémoire volatile 102 de type RAM, avant d'être exécutées par le processeur de l'unité de traitement 101.

Le dispositif 100 comprend en outre:
- une mémoire non volatile 103 de type ROM, destinée à contenir des infirmations persistantes ;
- une antenne 104 adaptée pour émettre et recevoir sur la voie radio et via l'air libre ou via le corps humain ;
- un démodulateur 105 destiné à recevoir via l'antenne 104 un signal électrique modulé et à le transformer en un signal numérique destiné à être transmis à l'unité de traitement 101; le démodulateur 105 est utilisé par exemple lors de l'étape T2(i) du procédé de réception précédemment décrit ;
- un modulateur 106 destiné à adapter un signal numérique produit par l'unité de traitement 101 afin qu'il soit transmis via l'antenne 104 ; le modulateur 106 est utilisé par exemple lors de l'étape T3(i) ou l'étape T6 du procédé de réception précédemment décrit ;
- un commutateur 107 adapté pour connecter à l'antenne 104 alternativement le démodulateur 105 (mode réception), et le modulateur 106 (mode émission) ;
- un circuit de détection 108 destiné à détecter le début et la fin d'un geste de validation par analyse de l'onde radio, modulée ou non, et notamment de sa puissance et de la dérivée de sa puissance ; ce circuit comprend des moyens de détection de modifications de l'onde radio résultantes d'un geste de validation d'un début dudit geste, et d'une fin dudit geste ; le circuit de validation 108 est utilisé par exemple lors de l'étape T1 ou l'étape T5 du procédé de réception précédemment décrit ; le calcul de la puissance et de la dérivée peut se faire sur le signal analogique ou de manière complètement numérique ;
- une horloge 109, optionnelle, destinée à coopérer avec l'unité de traitement 101, afin entre autre d'inclure un horodatage dans les messages msg1 ou msg2.

Le dispositif 100 est autonome et portatif, équipé d'une batterie ou de piles de tailles réduites afin d'être transporté par un utilisateur. Un tel dispositif 100 peut par exemple être mis en oeuvre dans un terminal mobile, ou être un terminal mobile adapté pour mettre en oeuvre le procédé de réception selon l'invention.

En relation avec la **figure 6****,** on présente maintenant un exemple de structure d'un dispositif de gestion d'un droit attribué sur la base d'une pluralité de gestes de validation effectués par au moins un utilisateur, selon un aspect de l'invention.

Le dispositif 200 met en oeuvre le procédé de gestion de droit attribués sur la base d'une pluralité de gestes de validation effectués par au moins un utilisateur, dont différents modes de réalisation viennent d'être décrits.

Par exemple, le dispositif 200 comprend une unité de traitement 201, équipée par exemple d'un microprocesseur µP, et pilotée par un programme d'ordinateur, stocké dans une mémoire et mettant en oeuvre le procédé selon l'invention. A l'initialisation, les instructions de code du programme d'ordinateur sont par exemple chargées dans une mémoire volatile 202 de type RAM, avant d'être exécutées par le processeur de l'unité de traitement 201, pour attribuer un droit à au moins un utilisateur sur la base des instants auxquels sont détectés plusieurs gestes de validation.

Le dispositif 200 comprend en outre :
- une mémoire non volatile 203 de type ROM, destinée à contenir des infirmations persistantes ;
- un récepteur 204 configuré pour obtenir une pluralité d'informations relatives à des instants de détection de modifications de caractéristique d'onde radio en champ proche, dites informations de détection.

Le dispositif 200 peut être compris dans un serveur informatique tel que le serveur S, Sa ou Sb, ou être compris dans une borne NFC tel que par exemple la borne B, ou une des bornes Ba, Bb, Bc, Bd, ou Be.

## Revendications

1. **Procédé** de réception d'une onde radio en champ proche, l'onde étant reçue en utilisant des capacités de conduction d'onde électromagnétique du corps d'un utilisateur (U) apte à effectuer un geste de validation modifiant des caractéristiques de l'onde radio, le procédé comprenant une détection (T1) d'une première modification de caractéristique de l'onde radio, la première modification étant résultante d'un début dudit geste,
le procédé étant **caractérisé en ce qu'**il comprend :
- une émission (T3(i)) d'un message relatif à la détection de la première modification, dit message de détection, à destination d'un serveur (S) gérant un droit pour l'utilisateur, et
- une détection (T4) d'une seconde modification de caractéristique de l'onde radio, la seconde modification étant résultante d'une fin dudit geste,
la première modification et la seconde modification conditionnant l'acquisition dudit droit pour l'utilisateur.

2. **Procédé** selon la revendication 1, où l'onde radio comprend des trames, le procédé comprenant l'extraction (T2(i), T5) d'un identifiant d'un dispositif émetteur (B) de l'onde radio en champ proche, à partir d'une trame.

3. **Procédé** selon l'une des revendications 1 ou 2, où l'onde radio comprend des trames, le procédé comprenant l'extraction (T2(i), T5), à partir d'au moins une trame, d'un code de vérification variable dans le temps, appelé aléa.

4. **Procédé** selon l'une des revendications 1 à 3, où le message de détection comprend au moins un élément d'un groupe comprenant:
• un identifiant du dispositif émetteur (B) de l'onde radio en champ proche,
• un aléa,
• une information relative à l'utilisateur (U).

5. **Procédé** selon l'une des revendications 1 à 4, où plusieurs messages de détection successifs sont émis jusqu'à la détection de la seconde modification, le premier message de la série étant émis dès la détection de la première modification.

6. **Procédé** selon l'une des revendications 2 à 5, où l'extraction d'une donnée à partir d'une trame est précédée par l'émission d'un message indicatif de la détection du geste de validation, dit message de retour, à destination du dispositif émetteur (B) de l'onde radio en champ proche.

7. **Dispositif** récepteur (T) d'une onde radio en champ proche, l'onde étant reçue en utilisant des capacités de conduction d'onde électromagnétique du corps d'un utilisateur (U) apte à effectuer un geste de validation modifiant des caractéristiques de l'onde radio, le dispositif comprenant un circuit de détection (108), un processeur (101) et une mémoire (102) couplée au processeur avec des instructions destinées à être exécutées par le processeur pour :
- détecter une première modification de caractéristique de l'onde radio, la première modification étant résultante d'un début dudit geste ;
- émettre au moins un message relatif à la détection de la première modification, dit message de détection, à destination d'un serveur (S) gérant un droit pour l'utilisateur, et
- détecter une seconde modification de caractéristique de l'onde radio, la seconde modification étant résultante d'une fin dudit geste ;
la première modification et la seconde modification conditionnant l'acquisition dudit droit pour l'utilisateur.

8. **Système** d'acquisition d'un droit temporaire, comprenant :
- un dispositif récepteur (T) conforme à la revendication 7,
- un dispositif émetteur (B), apte à émettre une onde radio en champ proche, et
- un dispositif de gestion de droits (S), apte à attribuer un droit en fonction au moins d'une information relative au début et à la fin du geste de validation.

9. **Système** selon la revendication 8, où :
- le dispositif émetteur (B) comprend un moyen de détection d'un contact physique avec l'utilisateur (U), et où
- le dispositif de gestion de droits (S) est en outre apte à attribuer le droit en fonction d'une information relative au contact physique.

10. **Système** selon l'une des revendications 8 ou 9, où :
- le dispositif émetteur (B) comprend en outre un moyen d'insertion dans l'onde radio en champ proche d'un aléa connu du dispositif de gestion de droits (S), et où
- le dispositif récepteur (T) comprend en outre un moyen d'extraction dudit aléa, et un moyen de transmission dudit aléa vers le dispositif de gestion de droits.

11. **Système** selon la revendication 8, où le dispositif émetteur (B) comprend :
- un moyen de détection d'un contact physique avec l'utilisateur (U), et
- un moyen d'insertion dans l'onde radio en champ proche d'un aléa connu du dispositif de gestion de droits (S), ce moyen étant activé après détection du contact physique avec l'utilisateur.

12. **Programme d'ordinateur,** comprenant des instructions qui, lorsque ces instructions sont exécutées par un processeur, conduisent celui-ci à mettre en oeuvre les étapes du procédé de réception d'une onde radio en champ proche, selon l'une des revendications 1 à 6.

13. **Support d'informations** lisible par un dispositif (T) récepteur d'une onde radio en champ proche, et comportant des instructions d'un programme d'ordinateur conforme à la revendication 12.

## Patentansprüche

1. Verfahren zum Empfangen einer Nahfeld-Funkwelle, wobei die Welle unter Verwendung von Fähigkeiten zum Leiten einer elektromagnetischen Welle des Körpers eines Benutzers (U) empfangen wird, welcher dazu fähig ist, eine Validierungsgeste auszuführen, die Eigenschaften der Funkwelle verändert, wobei das Verfahren das Detektieren (T1) einer ersten Eigenschaftsveränderung der Funkwelle beinhaltet, wobei sich die erste Veränderung aus einem Anfang der Geste ergibt, wobei das Verfahren **dadurch gekennzeichnet ist, dass** es Folgendes beinhaltet:
- Senden (T3(i)) einer Meldung bezüglich der Detektion der ersten Veränderung, als Detektionsmeldung bezeichnet, an einen Server (S), der ein Recht für den Benutzer verwaltet, und
- Detektieren (T4) einer zweiten Eigenschaftsveränderung der Funkwelle, wobei sich die zweite Veränderung aus einem Ende der Geste ergibt, wobei die erste Veränderung und die zweite Veränderung den Erwerb des Rechts für den Benutzer bedingen.

2. Verfahren nach Anspruch 1, wobei die Funkwelle Rahmen beinhaltet, wobei das Verfahren das Extrahieren (T2(i), T5) einer Kennung einer Sendevorrichtung (B) der Nahfeld-Funkwelle anhand eines Rahmens beinhaltet.

3. Verfahren nach Anspruch 1 oder 2, wobei die Funkwelle Rahmen beinhaltet, wobei das Verfahren das Extrahieren (T2(i), T5) eines zeitvariablen Verifizierungscodes, als Zufallswert bezeichnet, anhand mindestens eines Rahmens beinhaltet.

4. Verfahren nach einem der Ansprüche 1 bis 3, wobei die Detektionsmeldung mindestens ein Element einer Gruppe beinhaltet, die Folgendes beinhaltet:
• eine Kennung der Sendevorrichtung (B) der Nahfeld-Funkwelle,
• einen Zufallswert,
• eine Information bezüglich des Benutzers (U).

5. Verfahren nach einem der Ansprüche 1 bis 4, wobei bis zur Detektion der zweiten Veränderung mehrere aufeinanderfolgende Detektionsmeldungen gesendet werden, wobei die erste Meldung der Serie direkt nach der Detektion der ersten Veränderung gesendet wird.

6. Verfahren nach einem der Ansprüche 2 bis 5, wobei dem Extrahieren eines Datenelements anhand eines Rahmens das Senden einer Meldung, die die Detektion der Validierungsgeste anzeigt, als Rückmeldung bezeichnet, an die Sendevorrichtung (B) der Nahfeld-Funkwelle vorausgeht.

7. Empfangsvorrichtung (T) einer Nahfeld-Funkwelle, wobei die Welle unter Verwendung von Fähigkeiten zum Leiten einer elektromagnetischen Welle des Körpers eines Benutzers (U) empfangen wird, welcher dazu fähig ist, eine Validierungsgeste auszuführen, die Eigenschaften der Funkwelle verändert, wobei die Vorrichtung Folgendes beinhaltet: eine Detektionsschaltung (108), einen Prozessor (101) und einen mit dem Prozessor gekoppelten Speicher (102) mit Anweisungen, die dazu bestimmt sind, durch den Prozessor für Folgendes ausgeführt zu werden:
- Detektieren einer ersten Eigenschaftsveränderung der Funkwelle, wobei sich die erste Veränderung aus einem Anfang der Geste ergibt;
- Senden mindestens einer Meldung bezüglich der Detektion der ersten Veränderung, als Detektionsmeldung bezeichnet, an einen Server (S), der ein Recht für den Benutzer verwaltet, und
- Detektieren einer zweiten Eigenschaftsveränderung der Funkwelle, wobei sich die zweite Veränderung aus einem Ende der Geste ergibt;
wobei die erste Veränderung und die zweite Veränderung den Erwerb des Rechts für den Benutzer bedingen.

8. System für den Erwerb eines zeitlich befristeten Rechts, das Folgendes beinhaltet:
- eine Empfangsvorrichtung (T) nach Anspruch 7,
- eine Sendevorrichtung (B), die dazu fähig ist, eine Nahfeld-Funkwelle zu senden, und
- eine Rechteverwaltungsvorrichtung (S), die dazu fähig ist, ein Recht mindestens in Abhängigkeit von einer Information bezüglich des Anfangs und des Endes der Validierungsgeste zu erteilen.

9. System nach Anspruch 8, wobei:
- die Sendevorrichtung (B) ein Mittel zum Detektieren eines physischen Kontakts mit dem Benutzer (U) beinhaltet und wobei
- die Rechteverwaltungsvorrichtung (S) ferner dazu fähig ist, das Recht in Abhängigkeit von einer Information bezüglich des physischen Kontakts zu erteilen.

10. System nach einem der Ansprüche 8 oder 9, wobei:
- die Sendevorrichtung (B) ferner ein Mittel zum Einfügen eines der Rechteverwaltungsvorrichtung (S) bekannten Zufallswerts in die Nahfeld-Funkwelle beinhaltet und wobei
- die Empfangsvorrichtung (T) ferner ein Mittel zum Extrahieren des Zufallswerts und ein Mittel zum Übertragen des Zufallswerts an die Rechteverwaltungsvorrichtung beinhaltet.

11. System nach Anspruch 8, wobei die Sendevorrichtung (B) Folgendes beinhaltet:
- ein Mittel zum Detektieren eines physischen Kontakts mit dem Benutzer (U) und
- ein Mittel zum Einfügen eines der Rechteverwaltungsvorrichtung (S) bekannten Zufallswerts in die Nahfeld-Funkwelle, wobei dieses Mittel nach Detektion des physischen Kontakts mit dem Benutzer aktiviert wird.

12. Computerprogramm, das Anweisungen beinhaltet, die, wenn diese Anweisungen durch einen Prozessor ausgeführt werden, diesen dazu veranlassen, die Schritte des Verfahrens zum Empfangen einer Nahfeld-Funkwelle nach einem der Ansprüche 1 bis 6 umzusetzen.

13. Datenträger, der von einer Empfangsvorrichtung (T) einer Nahfeld-Funkwelle gelesen werden kann und Anweisungen eines Computerprogramms nach Anspruch 12 umfasst.

## Claims

1. Method for receiving a near-field radio wave, the wave being received using electromagnetic-wave conduction capacities of the body of a user (U) who is able to make a validation gesture that modifies characteristics of the radio wave, the method comprising detecting (T1) a first modification of a characteristic of the radio wave, the first modification being resultant from a start of said gesture, the method being **characterized in that** it comprises:
- sending (T3(i)) a message relating to the detection of the first modification, called the detection message, to a server (S) managing a right for the user, and
- detecting (T4) a second modification of a characteristic of the radio wave, the second modification being resultant from an end of said gesture,
the acquisition of said right for the user being dependent on the first modification and the second modification.

2. Method according to Claim 1, wherein the radio wave comprises frames, the method comprising extracting (T2(i), T5) an identifier of a device (B) that sent the near-field radio wave, from a frame.

3. Method according to either one of Claims 1 and 2, wherein the radio wave comprises frames, the method comprising extracting (T2(i), T5), from at least one frame, a time-variable verification code, which code is referred to as a random factor.

4. Method according to one of Claims 1 to 3, wherein the detection message comprises at least one element of a group comprising:
• an identifier of the device (B) that sent the near-field radio wave,
• a random factor,
• a datum relating to the user (U).

5. Method according to one of Claims 1 to 4, wherein a plurality of successive detection messages are sent up to the detection of the second modification, the first message of the series being sent as soon as the first modification is detected.

6. Method according to one of Claims 2 to 5, wherein before a datum is extracted from a frame a message indicative of the detection of the validation gesture, called the return message, is sent to the device (B) that sent the near-field radio wave.

7. Device (T) for receiving a near-field radio wave, the wave being received using electromagnetic-wave conduction capacities of the body of a user (U) who is able to make a validation gesture that modifies characteristics of the radio wave, the device comprising a detection circuit (108), a processor (101) and a memory (102) that is coupled to the processor and that contains instructions that are intended to be executed by the processor in order to:
- detect a first modification of a characteristic of the radio wave, the first modification being resultant from a start of said gesture;
- send at least one message relating to the detection of the first modification, called the detection message, to a server (S) managing a right for the user; and
- detect a second modification of a characteristic of the radio wave, the second modification being resultant from an end of said gesture;
the acquisition of said right for the user being dependent on the first modification and the second modification.

8. System for acquiring a temporary right, comprising:
- a receiving device (T) according to Claim 7,
- a sending device (B), able to send a near-field radio wave, and
- a rights-managing device (S), able to attribute a right depending on at least one datum relating to the start and to the end of the validation gesture.

9. System according to Claim 8, wherein:
- the sending device (B) comprises a means for detecting a physical contact with the user (U), and wherein
- the rights-managing device (S) is furthermore able to attribute the right depending on a datum relating to the physical contact.

10. System according to either of Claims 8 and 9, wherein:
- the sending device (B) furthermore comprises a means for inserting, into the near-field radio wave, a random factor known to the rights-managing device (S), and wherein
- the receiving device (T) furthermore comprises a means for extracting said random factor, and a means for transmitting said random factor to the rights-managing device.

11. System according to Claim 8, wherein the sending device (B) comprises:
- a means for detecting a physical contact with the user (U), and
- a means for inserting, into the near-field radio wave, a random factor known to the rights-managing device (S), this means being activated after detection of the physical contact with the user.

12. Computer program, comprising instructions that, when these instructions are executed by a processor, result in the latter implementing the steps of the method for receiving a near-field radio wave according to one of Claims 1 to 6.

13. Data medium readable by a device (T) for receiving a near-field radio wave, and comprising instructions of a computer program according to Claim 12.
